Europäisches Patentamt

(19) European Patent Office

Office européen des brevets

(11) Numéro de publication: **0 062 581**
**B1**

(12) **FASCICULE DE BREVET EUROPEEN**

(51) Int. Cl.⁴: **B 64 D 7/08,** B 64 D 1/02

(45) Date de publication du fascicule du brevet:
**31.07.85**

(21) Numéro de dépôt: **82400599.5**

(22) Date de dépôt: **01.04.82**

(54) Dispositif d'emport et d'éjection, à verrou de sécurité, de charges emportées sous aéronefs.

(30) Priorité: **03.04.81 FR 8106750**

(43) Date de publication de la demande:
**13.10.82 Bulletin 82/41**

(45) Mention de la délivrance du brevet:
**31.07.85 Bulletin 85/31**

(84) Etats contractants désignés:
**DE GB**

(56) Documents cités:
**FR - A - 2 284 520**
**FR - A - 2 364 166**
**FR - A - 2 423 397**
**GB - A - 2 005 812**
**US - A - 4 050 656**

(73) Titulaire: **R. ALKAN & Cie., Rue du 8 mai 1945,**
**F-94460 Valenton (FR)**

(72) Inventeur: **Hasquenoph, Jean, 12, rue deu 27 août 1944,**
**F-77400 Lagny (FR)**
Inventeur: **Coutin, Pierre, 117, avenue Général Michel**
**Bizot, F-75012 Paris (FR)**

(74) Mandataire: **Hud, Robert, Cabinet COLLIGNON 6, rue de**
**Madrid, F-75008 Paris (FR)**

BUNDESDRUCKEREI BERLIN

## Description

On connaît de nombreux dispositifs d'emport et d'éjection de charges emportées sous avion et des procédés de calage de ces charges sur des appuis fixes par soulèvement des chrochets du dispositif d'emport, après accrochage de la charge.

Généralement, immédiatement après l'accrochage de la charge, on introduit dans le dispositif d'emport une broche de sécurité qui interdit tout déclenchement intempestif. Les opérations complémentaires de mise à poste peuvent alors se faire sans risque et en particulier la manoeuvre des écrous de soulèvement des chrochets pour amener la charge contre des appuis fixes de calage. Ces systèmes à vis théoriquement irréversibles, mais soumis en vol et surtout sur hélicoptère à des vibrations relativement fortes, doivent être freinés après leur serrage.

Le document US-A-4 050 656 décrit un dispositif éjecteur pour charge emportée sous avion selon le préambule de la revendication 1, qui comporte un verrou agissant sur un mécanisme de déclenchement afin d'empêcher le fonctionnement intempestif de l'éjecteur au sol. Ce verrou est combiné avec un système de blocage d'un mécanisme de calage de la charge.

Le dispositif d'emport, de calage et d'éjection de charges emportées sous avion, dans lequel le fonctionnement intempestif de l'éjecteur au sol est empêché par verrouillage d'un mécanisme de déclenchement à l'aide d'un verrou qui est combiné avec un système de freinage d'un mécanisme de calage de la charge, se caractérise en ce que le mécanisme de calage comprend des écrous de relevage des chrochets de suspension de la charge et en ce que le verrou s'opposant à l'éjection et le système de freinage sont actionnés simultanément par un même organe de commande de telle façon que le verrouillage du mécanisme de déclenchement provoque le desserrage du système de freinage.

En position effacée de la poignée constituant l'organe de commande (position de vol), les écrous se trouvent verrouillés et le mécanisme de déclenchement libéré. Les écrous étant bloqués, l'opérateur ne pourra effectuer le calage de la charge et devra nécessairement amener la poignée dans la position relevée, ce qui aura pour effet de verrouiller le mécanisme de déclenchement et de libérer les écrous.

Inversement, avant l'envol, l'opérateur ramenant la poignée en position effacée provoquera la libération du mécanisme de déclenchement et le verrouillage des écrous de soulèvement des crochets. Des modes de réalisation edditionnels font l'objet des sous revendications.

Pour bien faire comprendre l'invention, on en décrira ci-après plus en détails un exemple d'exécution, en référence au dessin annexé, dans lequel:

— la figure 1 représente une coupe longitudinale du dispositif: charge accrochée, crochets de suspension de la charge en position basse, verrou de sécurité en place, écrous de manoeuvre en hauteur des crochets libérés;

— la figure 2 est une vue en coupe transversale du dispositif des crochets de suspension en position basse;

— la figure 3 représente une coupe analogue à la figure 1, mais le dispositif étant en position de vol: crochets de suspension en position haute, charge en contact contre les appuis fixes, écrous de manoeuvre en hauteur des crochets verrouillés, verrou de sécurité effacé;

— la figure 4 est une vue en coupe transversale du dispositif des chrochets de suspension en position haute; et

— la figure 5 est une vue de dessus du dispositif montrant le mécanisme de retrait des freins d'écrous.

On a représenté en 1 le contour schématique du dispositif d'accrochage, en 2 la charge, en 3-3' les crochets introduits dans les anneaux 4-4' de la charge 2, en 5-5' les chapes d'articulation des chrochets comportant les queues filetées 6-6' sollicitées vers le bas par des ressorts 7-7' et déplacées en hauteur par les écrous 8-8'. Ces écrous comportent des trous radiaux tels que 9-9' permettant l'introduction d'une broche de manoeuvre et une partie circulaire crénelée 10-10'.

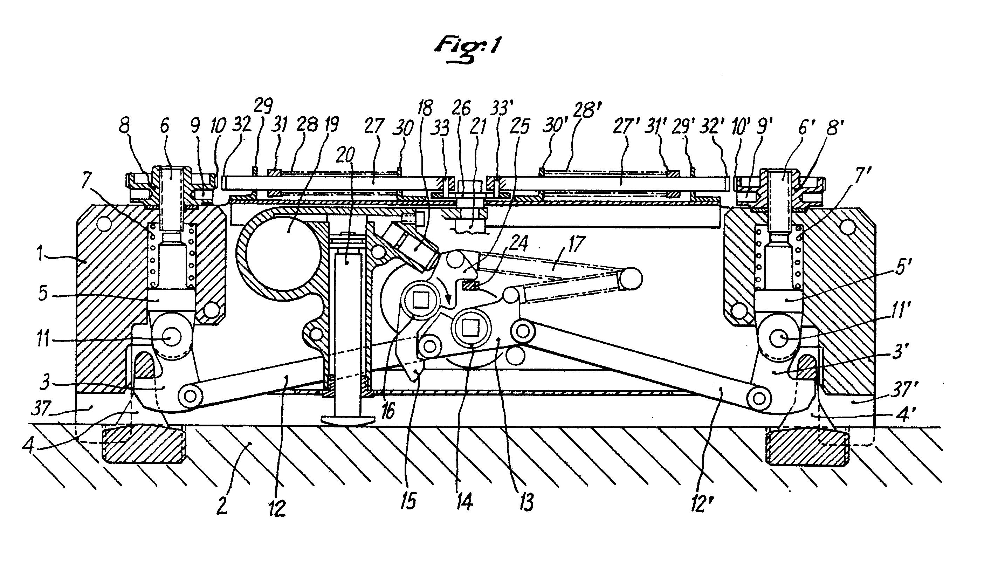

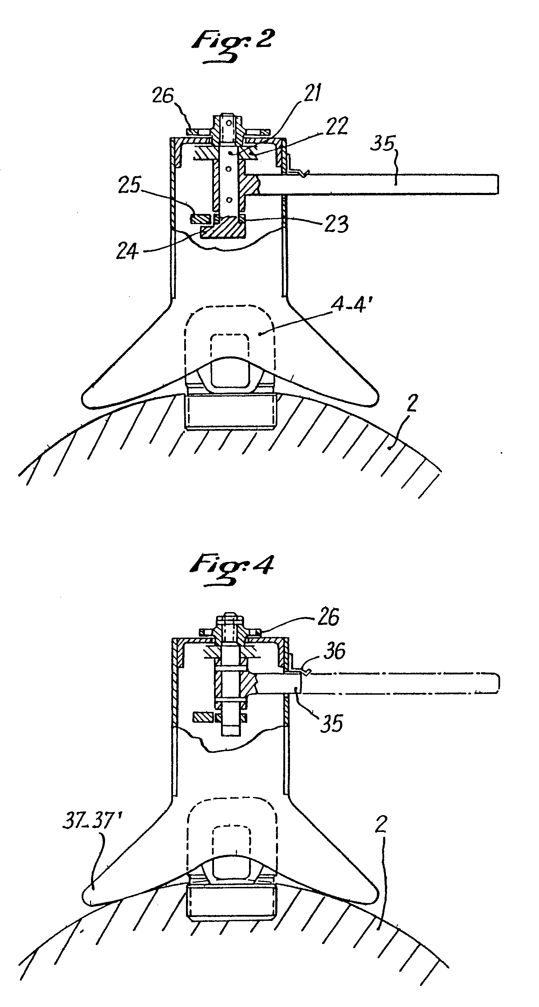

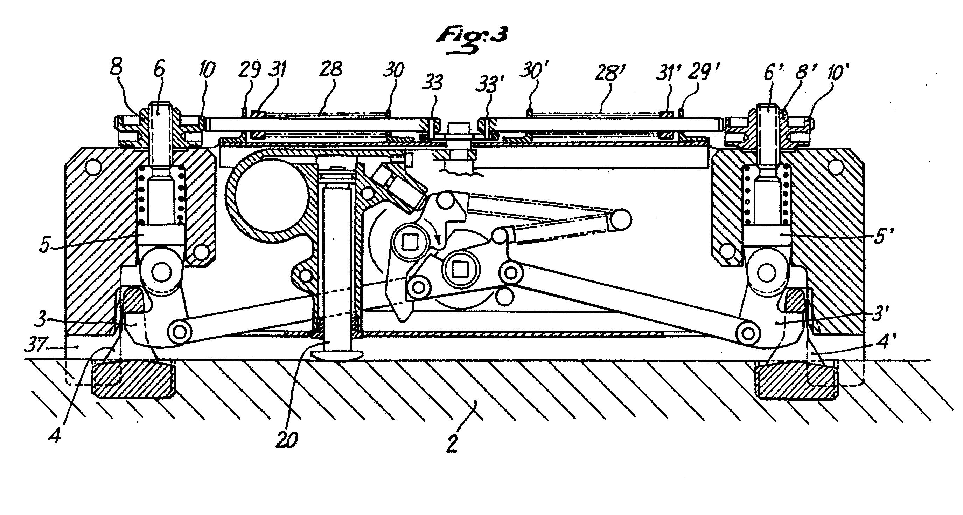

Les chrochets 3-3', articulés en 11-11' sur les chapes 5-5', sont embiellés sur mécanisme démultiplicateur d'effort d'un principe connu qui ne sera pas détaillé et qui est composé essentiellement par des bielles 12-12' articulées sur une pièce 13 pivotant sur des paliers fixes 14. La rotation de cette pièce 13 est empêchée par un crochet 15 articulé sur des paliers fixes 16. Le basculement de ce crochet dans le sens de la flèche des figures 1 et 3 libère la pièce 13 et permet l'ouverture des crochets 3-3'. Le chrochet 15 est sollicité par un ressort de compression 17 dans le sens de l'accrochage. Le déclenchement est obtenu par l'action d'un petit piston 18 actionné lui-même pyrotechniquement par un impulseur 19 agissant simultanément sur un piston d'éjection 20.

On a représenté en 21 (fig. 2) un verrou tournant autour d'un axe vertical sur des paliers 22 et 23. La partie inférieure de ce verrou 21 comporte un talon 24 pouvant s'insinuer sous la partie 25 du crochet 15 et la partie supérieure de ce même verrou 21 comporte un plateau 26 en forme de came agissant simultanément sur les tiges 27 et 27'. Ces tiges sont chacune sollicitées par un ressort 28 et 28' vers les parties crénelées 10 et 10' des écrous 8 et 8'. Elles sont guidées dans des paliers 29-30 et 29'-30' et chacune porte une chape 31-31' constituant un appui pour le ressort associé 28-28' et, à son extrémité voisine de l'écrou à immobiliser 8-8', un bec 32-32' en forme de coin pouvant s'engager dans les encoches de la partie crénelée 10-10'. A son extrémité opposée, chaque tige 27-27' porte un ergot 33-33' s'engageant dans une came 34-34' du plateau 26.

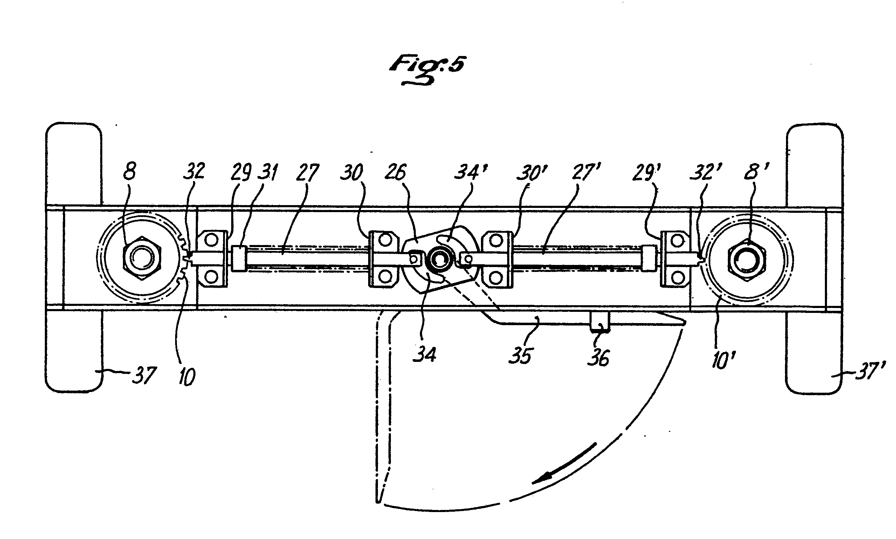

On a représenté en 35 une poignée de manoeuvre du verrou tournant 21 (figure 5), maintenue effacée en position de vol par une attache élastique 36.

Le fonctionnement du dispositif est le suivant: on supposera les crochets 3-3' en position basse et la charge 2 accrochée par ses anneaux 4-4' comme on l'a représenté sur la figure 1. Le fait d'amener la poignée de manoeuvre 35 de la position de vol représentée en traits pleins sur la figure 5 à la position représentée en traits mixtes en faisant tourner le verrou 21 dans le sens de la flèche de la figure 5 engage le talon 24 sous la partie 25 du crochet 15 (figures 1 et 2) en empêchant ainsi le déclenchement du mécanisme d'accrochage de la charge, même au cas d'un fonctionnement intempestif de l'impulseur pyrotechnique 19.

Simultanément, la rotation du plateau 26 solidaire du verrou 21 provoque, du fait de la forme des cames 34-34' (figure 5), le retrait des becs 32-32' hors des encoches des parties crénelées 10-10'. La rotation des écrous 8-8' à l'aide d'une broche standard introduite dans les trous 9-9' permet de soulever la charge 2 et de la caler sous les appuis fixes 37-37' comme on l'a indiqué sur la figure 4.

La manoeuvre inverse de la poignée 35 dégage le talon 24 en libérant le mécanisme de déclenchement et permet aux ressorts 28-28' d'engager les becs 32-32' dans les parties crénelées 10-10' des écrous 8-8' comme on l'a représenté sur la figure 3 qui est analogue à la figure 1 mais en diffère, d'une part, par le fait que les crochets de suspension 3 ont été relevés pour amener la charge dans la position de la figure 4 et, d'autre part, par le dégagement du talon de verrouillage 24 qui libère le mécanisme de déclenchement et par l'engagement simultané des becs 32-32' dans les parties crénelées 10-10' des écrous 8-8'.

## Revendications

1. Dispositif d'emport, de calage et d'éjection de charges (2) emportées sous avion, dans lequel le fonctionnement intempestif de l'éjecteur au sol est empêché par verrouillage d'un mécanisme de déclenchement (12, 12', 14) à l'aide d'un verrou (21, 24) qui est combiné avec un système de freinage (10, 32; 10', 32') d'un mécanisme de calage (3, 3'; 8, 8'; 37, 37') de la charge (2), caractérisé en ce que ledit mécanisme de calage comprend des écrous de relevage (8, 8') des crochets (3, 3') de suspension de la charge et en ce que le verrou (21, 24) s'opposant à l'éjection et le système de freinage sont actionnés simultanément par un même organe de commande (35) de telle façon que le verrouillage du mécanisme de déclenchement (12, 12', 14) provoque le desserrage du système de freinage (10, 32; 10', 32').

2. Dispositif selon la revendication 1, caractérisé en ce que le desserrage du système de freinage (10, 32; 10', 32') permet le calage de la charge (2) contre des appuis fixes (37, 37').

3. Dispositif selon la revendication 1 ou la revendication 2, caractérisé en ce que, le calage de la charge (2) étant effectué, le déverrouillage du mécanisme de déclenchement (12, 12', 14) avant l'envol provoque le freinage des écrous de relevage (8, 8') des crochets (3, 3').

## Patentansprüche

1. Vorrichtung zum Tragen, Befestigen und Abwerfen von per Flugzeug transportierten Lasten (2), bei der das unzeitige Auswerfen durch Verriegeln eines Auslösemechanismus (12, 12', 14) mit Hilfe einer Verriegelung (21, 24) verhindert wird, welche mit einem Bremssystem (10, 32; 10', 32') eines Befestigungsmechanismus (3, 3'; 8, 8'; 37, 37') für die Last (2) kombiniert ist, dadurch gekennzeichnet, daß der Befestigungsmechanismus Schraubmuttern (8, 8') für Lastaufhängehaken (3, 3') aufweist und daß die sich gegenüber dem Auswurf befindliche Verriegelung (21, 24) und das Bremssystem simultan durch dasselbe Steuerorgan (35) derart betätigbar sind, daß der Auslösemechanismus (12, 12', 14) das Lösen bzw. Entriegeln des Bremssystems (10, 32; 10', 32') veranlaßt.

2. Vorrichtung nach Anspruch 1, dadurch gekennzeichnet, daß das Lösen bzw. Entriegeln des Bremssystems (10, 32; 10', 32') die Last (2) gegen feste Stützen bzw. Auflager (37, 37') drückt.

3. Vorrichtung nach Anspruch 1 oder 2, dadurch gekennzeichnet, daß nach dem Befestigen bzw. Abstützen der Last (2) das Entriegeln bzw. Lösen des Auslösemechanismus (12, 12', 14) vor dem Abwerfen die Schraubmuttern (8, 8') der Haken (3, 3') verriegelt.

## Claims

1. Supporting, clamping and ejection device for loads (2) carried underneath an aircraft, in which the untimely operation of the ejector on the ground is prevented by locking a tripping mechanism (12, 12', 14) by means of a lock (21, 24) which is combined with a braking system (10, 32; 10', 32') of a clamping mechanism (3, 3'; 8, 8'; 37, 37') for the load (2), characterized in that said clamping mechanism comprises two nuts (8, 8') for raising the hooks (3, 3') for suspending the load and in that the lock (21, 24) opposing ejection and the braking system are actuated simultaneously by the same control member (35) so that locking of the tripping mechanism (12, 12', 14) causes release of the braking system (10, 32; 10', 32').

2. Device according to claim 1, characterized in that release of the braking system (10, 32; 10', 32') allows the load (2) to be clamped against fixed supports (37, 37').

3. Device according to claim 1 or claim 2, characterized in that, with clamping of the load (2) effected, unlocking of the tripping mechanism (12, 12', 14) before take-off causes braking of the raising nuts (8, 8') for the hooks (3, 3').

Fig.1

*Fig. 2*

*Fig. 4*

Fig. 3

Fig.5